# EUROPÄISCHE PATENTSCHRIFT

(11) **EP 0 528 161 B1**
(45) Veröffentlichungstag und Bekanntmachung des Hinweises auf die Patenterteilung: **22.02.1995**
(21) Anmeldenummer: 92111631.5
(22) Anmeldetag: 09.07.1992
(51) Int. Cl.: B01D 53/04

(54) **Koksfilter**
Coke-filter
Filtre à coke

(30) Priorität: 20.08.1991 DE 9110285 U
(43) Veröffentlichungstag der Anmeldung: 24.02.1993
(73) Patentinhaber: KRUPP POLYSIUS AG, 59269 Beckum (DE)
(72) Erfinder: Brentrup, Ludger, W-4740 Oelde 1 (DE); Schmits, Heinz-Herbert, W-4840 Rheda-Wiedenbrück (DE)
(74) Vertreter: Tetzner, Volkmar, Dr.-Ing. Dr. jur.

(56) Entgegenhaltungen:
- GB-A- 2 230 086
- GB-A- 2 234 346
- US-A- 4 685 938
- PATENT ABSTRACTS OF JAPAN vol. 13, no. 313 (C-618)17. Juli 1989
- PATENT ABSTRACTS OF JAPAN vol. 14, no. 303 (P-1070)29. Juni 1990

## Beschreibung

Die Erfindung betrifft ein Koksfilter entsprechend dem Oberbegriff des Anspruches 1.

Bekannte Koksfilter zur Reinigung von Gasströmen enthalten mindestens zwei Schüttschichten aus Braunkohlenkoks, die von dem zu reinigenden Gasstrom durchsetzt werden. Filter dieser Art können beträchtliche Abmessungen aufweisen, was im Hinblick auf die vielfach hohe Temperatur des zu reinigenden Gasstromes die Gefahr einer Selbstentzündung des Kokses bzw. der Ausbildung von Glimmnestern mit sich bringt.

Um derartige Gefahren frühzeitig erkennen zu können, ist es bekannt, Koksfilter mit Temperaturmeß- und Überwachungseinrichtungen zu versehen.

So hat man bereits Temperaturmeßeinrichtungen in Form punktuell messender Thermofühler vorgesehen, um die an vorgegebenen Stellen der Filterkammer herrschenden Temperaturen zu bestimmen. Vor allem im Hinblick auf den beträchtlichen Verschleiß, dem in oder nahe der Koksschüttung angeordnete Thermofühler ausgesetzt sind, ist jedoch der hierfür erforderliche Wartungsaufwand erheblich.

In den Patent Abstracts of Japan, Vol.13, No.313 (C-618) 17. Juli 1989, ist in der Zusammenfassung der JP-A-10 99 627 vom 18.04.89 eine Gasreinigungsvorrichtung beschrieben, die mehrere Adsorptionstürme enthält, in denen jeweils eine untere Schicht aus aktiviertem Aluminium-Oxid, darüber eine Schicht aus aktivierter Kohle und darüber eine Schicht aus synthetischem Zeolit angeordnet sind. In diesem Falle ist in jedem Adsorptionsturm im Grenzbereich zwischen der Schicht aus aktivierter Kohle und der Schicht aus synthetischem Zeolit ein Temperaturmeßfühler angeordnet, um Temperaturveränderungen in der Adsorptionszone zu ermitteln, wobei über ein gemeinsames Alarmsystem ein Alarm erzeugt werden kann, wenn ein unerwünschter Temperaturanstieg auftritt.

Aus den Patent Abstracts of Japan, Vol.14, No.303 (P1070), 29.06.90 und der dortigen Zusammenfassung der JP-A-20 96 624 vom 09.04.90 ist ferner ein Temperatursensorsystem bekannt, mit dem die Temperatur mit hoher Genauigkeit selbst in einem Ofen gesteuert werden soll, in dem eine explosive Substanz behandelt wird. In diesem Falle wird eine Signalverarbeitung beim Rückkehrstrahl eines ermittelten Laserpulsstrahles angewendet, um Temperaturdaten zu erhalten. Dabei wird in einem bestimmten Zeitintervall der Laserpulsstrahl für die Temperaturmessung zu einer optischen Faser gesendet, wobei über umfangreiche Schaltungseinrichtungen der Ausgang einer Temperatursteuereinrichtung durch eine Datensignalverarbeitungsschaltung und die Temperatur eines Objektes gesteuert wird.

Zur Überwachung von Koksfiltern hat man weiterhin die sogenannte Delta-CO-Messung eingesetzt. Hierbei wird über eine Differenzmessung zwischen Filtereingang und Filterausgang das durch die Oxidation des Kokses gebildete CO gemessen. Bei erhöhter Temperatur nimmt die spezifische CO-Bildungsrate deutlich zu und ermöglicht so eine relativ frühe Detektion. Das mit dieser Messung gewonnene integrale Signal ermöglicht allerdings in einer einfachen und praktikablen Ausführung keine örtliche Zuordnung der CO-Entstehung und damit eines sich entwickelnden Glimmbrandes. Für eine solche örtliche Detektion wäre eine Vielfachbeprobung, etwa unter Verwendung eines Systemes von Schnüffelleitungen, erforderlich.

Da ferner in vielen Fällen (etwa bei der Reinigung von Abgasen von Drehrohröfen für die Zementherstellung) ein relativ hoher und außerdem bei der Verbrennung von minderwertigen Brennstoffen (wie Autoreifen) auch schwankender Grundpegel an CO vorliegt, sind verhältnismäßig lange Mittlungszeiten für das Delta-CO-Signal erforderlich, um den Ort der Störung näher lokalisieren und gezielte Gegenmaßnahmen ergreifen zu können.

Der Erfindung liegt daher die Aufgabe zugrunde, ein Koksfilter entsprechend dem Oberbegriff des Anspruches 1 so auszubilden, daß die an allen kritischen Stellen des Koksfilters herrschenden Temperaturen auf einfache und zuverlässige Weise erfaßt werden.

Diese Aufgabe wird erfindungsgemäß durch die kennzeichnenden Merkmale des Anspruches 1 gelöst. Zweckmäßige Ausgestaltungen der Erfindung sind Gegenstand der abhängigen Ansprüche.

Als Temperaturmeßeinrichtung des Koksfilters wird erfindungsgemäß ein mit gepulstem Laserlicht gespeister Lichtleiter verwendet. Wird in einen solchen Lichtleiter von beiden Enden gepulstes Laserlicht eingestrahlt und das aufgrund des sogenannten Raman-Effektes zurückgestreute Licht gemessen, so liefert die Laufzeit eine Information über den Ort und die Intensität eine Information über die Temperatur längs des Lichtleiters. Genutzt werden hierbei die sogenannten "Anti Stokes"-Linien, die eine starke Temperaturabhängigkeit zeigen.

Erfindungsgemäß wird dieser Lichtleiter nahe den in der einen Kammerwand der Filterkammer vorgesehenen Abströmöffnungen angeordnet und schleifenförmig durch die Filterkammer geführt. Die Erfindung nutzt hierbei die Erkenntnis aus, daß die Wärme eines Glimmbrandes in einem Koksfilter mit dem Gasstrom zu der die Abströmöffnungen enthaltenden Kammerwand transportiert wird, wobei diese horizontale Ausbreitung (bei vertikaler Anordnung der Kammerwände) durch den Auftrieb der warmen Gase in der Koksschicht um eine vertikale Komponente überlagert wird. Bei den der Erfindung zugrundeliegenden Versuchen hat es sich jedoch als ausreichend erwiesen, die Temperatur des Gasstromes auf der Abströmseite zu messen, da damit eine ausreichende Genauigkeit erzielt wird, um Gegenmaßnahmen rechtzeitig einleiten zu können.

Zweckmäßig wird der Lichtleiter in der Koksschüttung angeordnet. Ist die mit den Abströmöffnungen versehene Kammerwand als Jalousiewand ausgebildet, so wird der Lichtleiter vorteilhaft in den die Abströmöffnungen bildenden Zwischenräumen der Jalousiewand vorgesehen. An dieser Stelle erfaßt der Lichtleiter zuverlässig die Temperatur des aus dem Koksfilter abströmenden Gases und ist zugleich weitgehend vor Beschädigung und Verschleiß geschützt, da sich die Koksschüttung nur sehr langsam bewegt.

Da der Lichtleiter schleifenförmig durch die Filterkammer geführt ist und als Information die Temperaturverteilung über die Länge des Lichtleiters liefert, läßt sich aus dieser Information eine zuverlässige Aussage über den genauen Ort eines eventuellen Glimmbrandes ableiten.

Besteht das Koksfilter aus mehreren Filterkammern, so wird zweckmäßig für jede Filterkammer ein eigener Meßkreis vorgesehen, wobei die einzelnen Meßkreise nacheinander abgefragt werden. Dafür sind pro Meßkreis etwa 10s erforderlich. Bei Verwendung von vier Meßkreisen liegt damit nach etwa 40s eine neue Temperaturverteilung über das gesamte Koksfilter vor. Die gewonnenen Daten werden mit Hilfe eines geeigneten Programmes verarbeitet, visualisiert und mit Alarmsignalen verknüpft. Die Visualisierung erlaubt es dem Bedienungspersonal, gezielte Gegenmaßnahmen zu ergreifen, etwa die Koksschüttung zu bewegen oder abzuziehen.

Wird der Lichtleiter in der Koksschüttung angeordnet, so werden die an den einzelnen Stellen in der Koksschüttung herrschenden Temperaturen zuverlässig gemessen, und es kommt nicht zu Verfälschungen durch aufwärts abgezogenes Gas aus tiefergelegenen Zonen. Die Anordnung des Lichtleiters in der Koksschüttung erlaubt ferner eine besonders sensitive Temperaturmessung. Bei den der Erfindung zugrundeliegenden Versuchen zeigte sich, daß eine Temperaturmessung im Gasraum auf der Abströmseite zu deutlich niedrigeren Meßwerten führt.

Indem der Lichtleiter nahe den Anströmöffnungen vorgesehen wird, erreicht man durch den mit der Gasströmung erfolgenden Wärmetransport eine Überwachung des gesamten Querschnitts der Filterfläche.

Der Lichtleiter der erfindungsgemäßen Einrichtung läßt sich sehr einfach montieren. Die gesamte Länge des Lichtleiters (beispielsweise ca. 1000 m pro Wand einer Filterkammer) kann unmittelbar vor dem Einbringen der Koksschüttung in den Innenraum der Filterkammer gebracht und darin von einer Rolle abgewickelt werden. Es ist damit nicht erforderlich, die gesamte Länge durch eine Vielzahl von Bohrungen zu fädeln.

Die Jalousieelemente der Jalousiewand lassen sich ohne vollständige Demontage des Lichtleiters (die mit dem Risiko einer Zerstörung verbunden wäre) auswechseln. Zu diesem Zweck muß lediglich die Klemmbefestigung des Lichtleiters an den Lichtleiterträgern des auszuwechselnden Jalousieelementes gelöst werden.

Ein Ausführungsbeispiel der Erfindung ist in der Zeichnung veranschaulicht. Es zeigen
- Fig.1: eine schematische Aufsicht auf ein erfindungsgemäßes Koksfilter,
- Fig.2: einen Vertikal-Teilschnitt durch die mit den Abströmöffnungen versehene Jalousiewand,
- Fig.3: einen Horizontalschnitt durch zwei benachbarte Jalousieelemente.

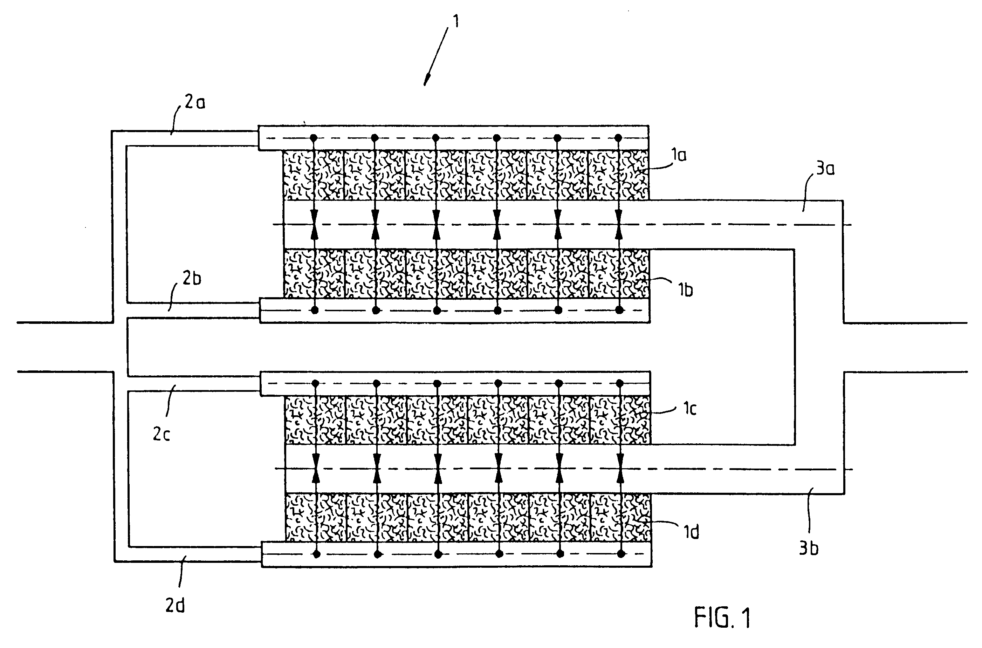

Das in Fig.1 ganz schematisch veranschaulichte Koksfilter 1 besteht aus vier nebeneinander angeordneten Filterkammern 1a, 1b, 1c und 1d. Die Zuführung des zu reinigenden Gasstromes zu den Filterkammern erfolgt über Zuströmleitungen 2a, 2b, 2c, 2d. Die Abführung des Gasstromes nach Durchsetzen des Koksfilters 1 erfolgt über Abströmleitungen 3a, 3b.

Die Filterkammern 1a, 1b, 1c, 1d sind von vertikal angeordneten Kammerwänden begrenzt, in denen auf der einen Seite Zuströmöffnungen und auf der anderen Seite Abströmöffnungen für den zu reinigenden Gasstrom vorgesehen sind.

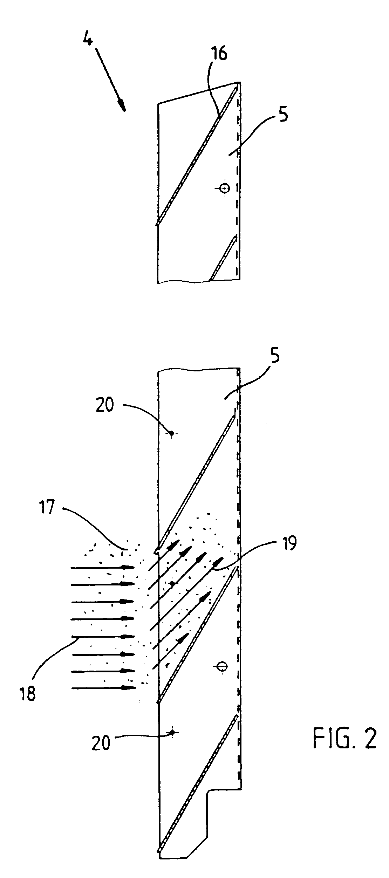

Fig.2 veranschaulicht in einem vertikalen Teilschnitt eine Kammerwand 4, die mit Anströmöffnungen 5 für den Gasstrom versehen ist.

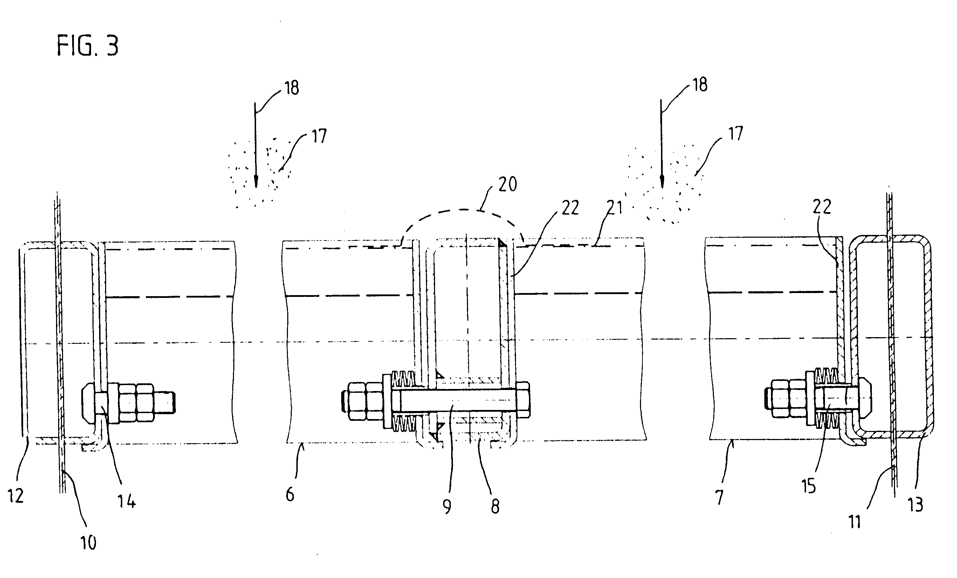

Die Kammerwand 4 ist als Jalousiewand ausgebildet und besteht - wie insbesondere Fig.3 erkennen läßt - aus einzelnen neben- und übereinander angeordneten Jalousieelementen (z. B. 6, 7), die mit einem zwischen diesen benachbarten Jalousieelementen 6, 7 angeordneten Trägerprofil 8 über Schraubbolzen 9 verbunden sind. An den beiden Längsseiten ist die Filterkammer durch Kammerwände 10, 11 abgeschlossen, die über Tragprofile 12, 13 und Schraubbolzen 14, 15 mit den angrenzenden Jalousieelementen 6, 7 verbunden sind.

Die Jalousieelemente 6, 7 enthalten geneigt angeordnete Jalousiebleche 16, die die Abströmöffnungen 5 begrenzen.

Die in der Filterkammer angeordnete Koksschüttung 17 erstreckt sich teilweise - wie Fig.2 erkennen läßt - in den von übereinanderliegenden Jalousieblechen 16 begrenzten Raum hinein.

Die Koksschüttung 17 wird in horizontaler Richtung (Pfeile 18) von dem zu reinigenden Gasstrom durchsetzt, der durch die Abströmöffnungen 5 abströmt (Pfeile 19).

Zur Bestimmung der in der Filterkammer herrschenden Temperaturen dient eine Temperaturmeßeinrichtung, die einen mit gepulstem Laserlicht gespeisten Lichtleiter 20 enthält. Dieser Lichtleiter 20 ist nahe bzw. in den Abströmöffnungen 5 der Kammerwand 4 in der Koksschüttung 17 angeordnet und schleifenförmig durch die Filterkammer geführt.

Zu diesem Zweck sind in den die Abströmöffnungen 5 bildenden Zwischenräumen der Jalousiewand 4 stabförmige Lichtleiterträger 21 (in Fig.3 schematisch veranschaulicht) vorgesehen, die zur lösbaren Halterung des Lichtleiters 20 dienen. Diese Lichtleiterträger 21 sind an Stegen 22 der Jalousieelemente 6, 7 befestigt, die die Abströmöffnungen 5 seitlich begrenzen.

Der Lichtleiter 21 wird zweckmäßig in Edelstahlröhrchen von kleinem Durchmesser (ca. 1mm) verlegt. An den Übergangsstellen zwischen benachbarten Jalousieelementen 6 und 7, d. h. in der Zone des diese Jalousieelemente 6, 7 miteinander verbindenden Trägerprofiles 8, wird der Lichtleiter 20 vorzugsweise lose in der Koksschüttung 17 verlegt (vgl. Fig.3).

Der Lichtleiter 20 wird auf diese Weise zunächst horizontal durch alle auf gleicher Höhe nebeneinanderliegenden Abströmöffnungen 5 aller benachbarten Jalousieelemente einer Kammerwand geführt, ehe er dann durch die in vertikaler Richtung benachbarten (nächsthöheren bzw. nächsttieferen) Abströmöffnungen geführt wird.

Bei der Montage des Koksfilters wird zunächst die Filterkammer vollständig montiert. Ehe dann die Koksschüttung eingebracht wird, erfolgt die Montage des Lichtleiters. Der Lichtleiter kann zu diesem Zweck in einer Rolle in das Innere der Filterkammer eingebracht und dann an den Lichtleiterträgern 21 mittels einer einfachen Klemmbefestigung angebracht werden, was mühelos von der Außenseite der Jalousiewand her (mittels Hindurchgreifens durch die Anströmöffnungen 5) geschehen kann.

Erweist es sich nach einer gewissen Betriebszeit als erforderlich, einzelne Jalousieelemente 6, 7 auszuwechseln, so kann dies ohne vollständige Demontage des Lichtleiters 20 in einfacher Weise derart erfolgen, daß die Klemmverbindung zwischen dem Lichtleiter 20 und dem Lichtleiterträger 21 im Bereich des auszuwechselnden Jalousieelementes 6, 7 gelöst wird, wonach das betreffende Jalousieelement ohne Schwierigkeit von dem benachbarten Trägerprofil 8 entfernt werden kann.

Die Lichtleiterträger 21 können beispielsweise durch Moniereisen von etwa 6 mm Durchmesser gebildet werden.

## Patentansprüche

1. Koksfilter zur Reinigung eines Gasstromes, enthaltend
a) ein Filtergehäuse mit wenigstens einer zur Aufnahme einer Koksschüttung (17) dienenden Filterkammer (1a,1b,1c,1d), die von Kammerwänden begrenzt ist, in denen Zuströmöffnungen und Abströmöffnungen (5) für den zu reinigenden Gasstrom vorgesehen sind,
b) sowie eine Temperaturmeßeinrichtung zur Bestimmung der an vorgegebenen Stellen der Filterkammer herrschenden Temperaturen,
dadurch gekennzeichnet, daß
c) die Temperaturmeßeinrichtung einen mit gepulstem Laserlicht gespeisten Lichtleiter (20) enthält, der nahe den Abströmöffnungen (5) schleifenförmig durch die Filterkammer geführt ist.

2. Koksfilter nach Anspruch 1, dadurch gekennzeichnet, daß der Lichtleiter (20) in der Koksschüttung (17) angeordnet ist.

3. Koksfilter nach Anspruch 1, dadurch gekennzeichnet, daß die mit den Abströmöffnungen (5) versehene Kammerwand (4) als Jalousiewand ausgebildet und der Lichtleiter (20) in den die Abströmöffnungen (5) bildenden Zwischenräumen der Jalousiewand angeordnet ist.

4. Koksfilter nach Anspruch 3, dadurch gekennzeichnet, daß in den die Abströmöffnungen (5) bildenden Zwischenräumen der Jalousiewand zur lösbaren Halterung des Lichtleiters (20) dienende, vorzugsweise stabförmige Lichtleiterträger (21) vorgesehen sind.

5. Koksfilter nach Anspruch 4, dadurch gekennzeichnet, daß die Jalousiewand aus einzelnen neben- und übereinander angeordneten Jalousieelementen (6, 7) besteht, wobei benachbarte Jalousieelemente mit einem zwischen diesen Jalousieelementen angeordneten Trägerprofil (8) verbunden sind.

6. Koksfilter nach Anspruch 4, dadurch gekennzeichnet, daß der Lichtleiter (20) nach der Montage der Filterkammer und vor Einbringen der Koksschüttung (17) von der Außenseite der Jalousiewand her, vorzugsweise über Klemmverbindungselemente, mit den Lichtleiterträgern (21) verbindbar ist.

7. Koksfilter nach den Ansprüchen 4 und 5, dadurch gekennzeichnet, daß die Lichtleiterträger (21) an die Abströmöffnungen (5) seitlich begrenzenden Stegen (22) der Jalousieelemente (6, 7) befestigt sind.

8. Koksfilter nach Anspruch 7, dadurch gekennzeichnet, daß nach Lösen der Verbindung zwischen dem Lichtleiter (20) und dem zu einem Jalousieelement (6, 7) gehörenden Lichtleiterträger (21) dieses Jalousieelement von den benachbarten Trägerprofilen (8) lösbar und ohne vollständige Demontage des Lichtleiters auswechselbar ist.

9. Koksfilter nach Anspruch 1, dadurch gekennzeichnet, daß der Lichtleiter (20) mit seinen beiden Enden an eine Einrichtung zur Einspeisung von gepulstem Laserlicht angeschlossen ist.

10. Koksfilter nach Anspruch 1, dadurch gekennzeichnet, daß der Lichtleiter (20) in Edelstahlröhrchen von kleinem Durchmesser verlegt ist.

11. Koksfilter nach Anspruch 5, dadurch gekennzeichnet, daß der Lichtleiter (20) im Bereich eines zwei benachbarte Jalousieelemente (6,7) miteinander verbindenden Trägerprofiles (8) frei in der Koksschüttung angeordnet ist.

## Claims

1. Coke filter for cleansing a gas stream, comprising
a) a filter housing with at least one filter chamber (1a, 1b, 1c, 1d) which serves to receive a granular mass of coke (17) and is defined by chamber walls in which inlet openings and outlet openings (5) are provided for the gas stream to be cleansed,
b) and a temperature measuring arrangement for determining the temperatures prevailing at predetermined locations in the filter chamber,
characterised in that
c) the temperature measuring arrangement contains a photoconductor (20) which is supplied with pulsed laser light and is passed in a loop through the filter chamber near the outlet openings (5).

2. Coke filter as claimed in claim 1, characterised in that the photoconductor (20) is arranged in the coke mass (17).

3. Coke filter as claimed in claim 1, characterised in that the chamber wall (4) provided with the outlet openings (5) is constructed as a louvre wall and the photoconductor (20) is arranged in the spaces in the louvre wall which form the outlet openings (5).

4. Coke filter as claimed in claim 3, characterised in that photoconductor carriers (21) which are preferably bar-shaped and serve for releasable mounting of the photoconductor (20) are provided in the spaces in the louvre wall which form the outlet openings (5).

5. Coke filter as claimed in claim 4, characterised in that the louvre wall consists of individual louvre elements (6, 7) which are arranged adjacent to and above one another, adjacent louvre elements being connected to a girder section (8) arranged between these louvre elements.

6. Coke filter as claimed in claim 4, characterised in that after the filter chamber has been assembled and before the granular mass of coke (17) is introduced the photoconductor (20) is connected to the photoconductor carriers (21) from the outside of the louvre wall, preferably by means of clamp connection elements.

7. Coke filter as claimed in claims 4 and 5, characterised in that the photoconductor carriers (21) are fixed onto the crosspieces (22) of the louvre elements (6, 7) which laterally define the outlet openings (5).

8. Coke filter as claimed in claim 7, characterised in that after releasing the connection between the photoconductor (20) and the photoconductor carrier (21) appertaining to one louvre element (6, 7) this louvre element can be released from the neighbouring girder sections (8) and can be replaced without complete removal of the photoconductor.

9. Coke filter as claimed in claim 1, characterised in that the photoconductor (20) is connected with both its ends to an arrangement for supplying pulsed laser light.

10. Coke filter as claimed in claim 1, characterised in that the photoconductor (20) is laid in fine steel tubes of small diameter.

11. Coke filter as claimed in claim 5, characterised in that the photoconductor (20) is arranged freely in the granular mass of coke in the region of a girder profile (8) which connects two neighbouring louvre elements (6, 7) to one another.

## Revendications

1. Filtre au coke d'épuration d'un flux gazeux, comprenant
a) une enveloppe logeant au moins une chambre de filtration (1a, 1b, 1c, 1d), destinée à loger une couche en vrac de coke (17) et délimitée par des cloisons dans lesquelles des canaux d'admission et des canaux de sortie (5) du flux gazeux à épurer sont prévus,
b) ainsi qu'un dispositif de mesure de température destiné à la détermination des températures régnant en des emplacements prescrits de la chambre de filtration,
caractérisé en ce que
c) le dispositif de mesure de température comprend un guide d'ondes lumineuses (20) recevant de la lumière laser pulsée et passant dans la chambre de filtration en formant une boucle à proximité des canaux de sortie (5).

2. Filtre au coke selon la revendication 1, caractérisé en ce que le guide d'ondes lumineuses (20) est disposé dans la couche en vrac de coke (17).

3. Filtre au coke selon la revendication 1, caractérisé en ce que la cloison (4) de la chambre qui compote les canaux de sortie (5) est conformée en cloison à jalousies et le guide d'ondes lumineuses (20) est disposé dans les espaces intermédiaires de la cloison à jalousies qui forment des canaux de sortie (5).

4. Filtre au coke selon la revendication 3, caractérisé en ce que des supports du guide d'ondes lumineuses (21), de préférence en forme de barres servant à la fixation amovible du guide d'ondes lumineuses (20), sont prévus dans les espaces intermédiaires de la cloison à jalousies qui forment les canaux de sortie (5).

5. Filtre au coke selon la revendication 4, caractérisé en ce que la cloison à jalousies se compose d'éléments individuels voisins juxtaposés et superposés de jalousie (6, 7), les éléments voisins de jalousie étant reliés par un profilé de support (8) disposé entre ces éléments de jalousie.

6. Filtre au coke selon la revendication 4, caractérisé en ce que le guide d'ondes lumineuses (20) peut être relié à ses supports (21) par le côté extérieur de la cloison à jalousies, de préférence au moyen d'éléments de liaison par serrage, après le montage de la chambre de filtration et avant l'introduction de la couche en vrac de coke (17).

7. Filtre au coke selon les revendications 4 et 5, caractérisé en ce que le support (21) du guide d'ondes lumineuses est fixé à des traverses (22) des éléments de jalousie (6,7) qui délimitent latéralement les canaux de sortie (5).

8. Filtre au coke selon la revendication 7, caractérisé en ce qu'après libération de la liaison entre le guide d'ondes lumineuses (20) et son support (21) associé à un élément de jalousie (6, 7), cet élément de jalousie peut être dégagé des profilés voisins de support (8) et interchangé sans démontage complet du guide d'ondes lumineuses.

9. Filtre au coke selon la revendication 1, caractérisé en ce que le guide d'ondes lumineuses (20) est raccordé aux deux extrémités à un dispositif d'envoi de lumière laser pulsée.

10. Filtre au coke selon la revendication 1, caractérisé en ce que le guide d'ondes lumineuses (20) est posé dans des petits tubes d'acier spécial de faible diamètre.

11. Filtre au coke selon la revendication 5, caractérisé en ce que le guide d'ondes lumineuses (20) est disposé librement dans la couche en vrac de coke dans la région d'un profilé de support (8) qui relie deux éléments voisins de jalousie (6, 7).
